Europäisches Patentamt

European Patent Office

Office européen des brevets

(11) Veröffentlichungsnummer: **0 294 539 B1**

## (12) EUROPÄISCHE PATENTSCHRIFT

(45) Veröffentlichungstag der Patentschrift: **05.08.92**

(21) Anmeldenummer: **88101573.9**

(22) Anmeldetag: **04.02.88**

(51) Int. Cl.⁵: **B29C 65/18**, E02D 19/18, F16B 5/00

�</> Verfahren und Vorrichtung zur Verschweissung von Fugenband.

(30) Priorität: **06.06.87 DE 3719079**

(43) Veröffentlichungstag der Anmeldung:
**14.12.88 Patentblatt 88/50**

(45) Bekanntmachung des Hinweises auf die
Patenterteilung:
**05.08.92 Patentblatt 92/32**

(84) Benannte Vertragsstaaten:
**AT BE CH DE FR LI NL**

(56) Entgegenhaltungen:
**EP-A- 0 129 275**
**DE-A- 3 430 789**
**DE-C- 717 959**
**FR-A- 1 331 028**

(73) Patentinhaber: **HÜLS TROISDORF AKTIENGE-**
**SELLSCHAFT**
**Postfach 11 65**
**W-5210 Troisdorf(DE)**

(72) Erfinder: **Schlütter, Aloys**
**Rheinstrasse 42**
**W-4152 Kempen 3(DE)**
Erfinder: **Kaewert, Klaus**
**Gänsestrasse 4**
**W-4000 Düsseldorf 13(DE)**
Erfinder: **Pylen, Johannes Theodor**
**Rheindahlener Strasse 303**
**W-4060 Viersen 11(DE)**

Rank Xerox (UK) Business Services

## Beschreibung

Die Erfindung betrifft ein Verfahren zur Verschweißung von Fugenband für Schlitzwandabdichtungen, insbesondere zur Verbindung von Kunststoffabdichtungsbahnen oder Betonpaneelen in Erdschlitzen mit Bentonitfüllung oder dergleichen, wobei jede zu verbindende Seite einer Kunststoffabdichtungsbahn oder eines Paneels mit einem Fugenband versehen ist und beide zu verbindenden Bahnen oder Paneele unter Mitführen einer Schweißpatrone nacheinander in den Erdschlitz abgesenkt werden und die Fugenbänder derart ineinandergeschoben werden, daß ein Widerstand gegen Auseinanderziehen in horizontaler Richtung entsteht und wobei anschließend unter Nachobenziehen der Schweißpatrone in einer, die Fugenbänder in Längsrichtung durchsetzenden Öffnung die Fugenbänder miteinander verschweißt werden.

Es ist bekannt, zur Einkapselung von Erdbereichen, insbesondere Deponien, Schlitzwände zu setzen. Desgleichen werden Schlitzwände zur Deichbefestigung und in anderen Anwendungsfällen vorgesehen, in denen Flüssigkeitsströmungen unterbrochen werden sollen oder aber der Zutritt von Flüssigkeiten, insbesondere Grundwasser, oder ein Austritt von Flüssigkeiten wie beispielsweise Sickerwässern aus Deponien verhindert werden soll.

Bislang war es üblich, Schlitzwände dadurch herzustellen, daß Erdschlitze ausgehoben und zugleich mit Bentonit oder ähnlichen Massen gefüllt wurden. Dazu gehört auch Erdbeton. Es hat sich jedoch gezeigt, daß insbesondere aggressive Sickerwässer oder auch flüssige Kohlenwasserstoffe derartige Schlitzwände durchdringen können. Für solche Fälle ist der Einbau von Abdichtungsbahnen aus Kunststoff in den Schlitzwänden vorgesehen. Die Abdichtungsbahnen werden nacheinander in die mit Bentonit oder dergleichen Massen gefüllten Erdschlitze eingezogen. Dann ist zwar im Bereich der Abdichtungsbahnen die gewünschte Abdichtung gewährleistet, jedoch nicht dort, wo die Abdichtungsbahnen einander berühren oder überlappen.

Es ist bekannt, die Abdichtungsbahnen an ihren Rändern mit Fugenbändern zur versehen. Die Fugenbänder besitzen ein Profil, z. B. ein widerhakenförmiges Profil, mit dem sie sich ineinanderschieben und verzahnen lassen. Dadurch wird eine Verbindung zwischen den einzelnen Bahnenrändern hergestellt. Die Verbindung ist aber immer noch nicht dicht. Vor allem bei Abdichtungsbahnen für sehr tiefe Schlitzwände müssen die Fugenbänder in ihrem Profil ein so großes Spiel aufweisen, daß das Ineinanderschieben nicht durch zu große Reibung behindert wird. Das notwendige Bewegungsspiel ist gleichbedeutend mit einem Spalt zwischen den Fugenbändern. Durch den Spalt können Leckwässer austreten bzw. werden unerwünschte Undichtigkeiten gebildet.

Es sind verschiedenste Vorschläge zur Beseitigung des Spaltes bzw. Abdichtung des Spaltes bislang gemacht worden. Eine der Überlegungen basiert darauf, eine Schnur einzuziehen, die aus einem in Berührung mit Wasser aufquellenden Material besteht. Das Aufquellen führt zu einem Verschließen des Spaltes. In der Praxis zeigt sich jedoch, daß die vorhandenen Materialien keine ausreichende Beständigkeit gegen aggressive Wässer haben. Hinzukommt die Verschmutzung des Dichtspaltes durch Bentonitpartikel bzw. Sandkörner. Derartige Partikel verhindern ein schließendes Anlegen der aufquellenden Schnur an die vorhandenen Dichtflächen. Es bleiben mehr oder weniger gravierende Leckstellen.

Ein anderer Vorschlag sieht die Injektion von Abdichtungsmitteln wie beispielsweise Silikon oder Kunststoffharzen vor. Das Abdichtungsmittel wird durch einen in die Fugenbänder eingeformten separaten Kanal zugeführt und tritt unten an den Fugenbändern aus, um dann unter Ausfüllung des Dichtspaltes zwischen den Fugenbändern oben wieder herauszutreten. Der Austritt oben ist zugleich eine Kontrolle für eine vollständige Ausfüllung des Dichtspaltes. Dieses Verpressen beinhaltet erhebliche Vorteile gegenüber der eingelegten Schnur. Gleichwohl sind noch weitergehende Anforderungen an die Abdichtung zwischen den Bahnen gestellt worden.

Eine ähnliche Problematik wie bei den Ablichtungsbahnen besteht bei Betonpaneelen, die zur Abdichtung von Schlitzwänden in mit Bentonit gefüllte Erdschlitze versenkt werden. Derartige Betonpaneele werden durch Fugenbänder miteinander verbunden, um z. B. einen Wasserdurchtritt zwischen den Paneelen zu verhindern

Aus der DE-A-3430789 wird vorgeschlagen, die Fugenbänder miteinander zu verschweißen. Nach dieser Druckschrift setzt das voraus, daß die Schweißstelle großräumig umbaut wird, um Schweißflächen von dem Bentonit zu befreien, bzw. zu reinigen und von dem umgebenden Bentonit in der Schlitzwand freizuhalten. Eine derartige Bauweise erfordert einen erheblichen Material- und Arbeitsaufwand.

Auch liegt der Erfindung die Aufgabe zugrunde, die Fugenbänder mit einander zu verschweißen. Dabei schließt die Erfindung an einen älteren, nicht vorveröffentlichten Vorschlag gemäß der DE-A-3712535 an. Nach diesem älteren Vorschlag besitzt mindestens eines der Fugenbänder im Dichtbereich eine bewegliche Membran. Von der Membran wird eine Seite mit Hilfe einer Schweißpatrone angeschmolzen, um danach mit Hilfe einer Andruckpatrone von der anderen Membranseite gegen die ebenfalls aufgeschmolzene Dichtfläche des korrespondierenden Fugenbandes angedrückt zu werden. Dabei war an eine Schweißung gedacht, wie sie hinsichtlich der Temperaturverhältnisse und der Tiefe der Aufschmelzung bei der Verschweißung von Kunststoff bahnen für die Sohlabdichtung von Deponien oder bei der Verschweißung von Kunststoffbahnen für Dachabdichtungen vorkommen. In Anwendung der bekannten Schweißtechniken war von definierten Schweißflächen ausgegangen worden. D. h. diese definierten Schweißflächen sollten durch besondere vorausgehende Maßnahmen geschaffen werden. Dazu gehörte ein Sauberspülen des Spaltes zwischen den Fugenbändern. Daran schloß sich ein Freiblasen und Trockenblasen des Spaltes mit Druckluft an. Das Spülwasser und die Druckluft sollten unter Verwendung ähnlicher Fugenbänder wie beim Verpressen von Dichtmitteln durch den Kanal zugeführt, der beim Verpressen mit Dichtmittel der Dichtmittelzuführung dient. Dem lag die Vorstellung zugrunde, daß Sauberkeit und Trockenheit an den Schweißflächen für eine ausreichende Verschweißung erforderlich sind.

Die gestellte Aufgabe wird mit den Merkmalen des Anspruchs 1 bzw. denen des Anspruchs 4 gelöst.

Die Erfindung löst sich also von beiden abgenannten Vorstellungen. Nach der Erfindung kann sowohl auf das Sauberspülen wie auf das Freiblasen und Trockenblasen verzichtet werden. Das geschieht nach der Erfindung dadurch, daß entweder mit der Schweißpatrone oder aber mit Hilfe eines vorlaufenden Kolbens die sich im Dichtspalt befindliche Flüssig-Bentonitmasse mit nach oben herausgezogen wird. Dabei schiebt der Kolben bzw. die Schweißpatrone die Flüssig-Bentonitsäule vor sich her. Dann bleibt zwar auf den Dichtflächen noch eine Restfeuchte. Der Schweißpatrone kann jedoch eine solche Temperatur gegeben werden, daß die Restfeuchte verdampft.

An dieser Stelle setzt ein weiterer erfindungsgemäßer Schritt ein, indem der der Verschweißung sonst hinderliche Schmutz bzw. Partikelschicht auf den Dichtflächen dadurch überwunden wird, daß eine Umformung an den Dichtflächen stattfindet. Ein Teil des plastifizierten Materials wird von der Schweißpatrone unter Einschluß der Schmutzpartikel verlagert. Das ist mit einer Änderung des Innenquerschnittes der Fugenbänder verbunden. Wahlweise kann die Querschnittsform durch einen anschließenden Verformungsvorgang weitgehend wieder hergestellt werden. Für die Abdichtung des Spaltes ist das jedoch nicht erforderlich. Vorzugsweise beschränkt sich der Schweißvorgang deshalb auf den ersten o. b. Umformungsteil.

Das Ergebnis der Umformung kann vielgestaltiger Art sein. Wahlweise wird im Dichtspalt ein Steg aufgebaut. Bei mittiger Anordnung der Schweißpatrone im Dichtspalt kann jeweils ein Steg beiderseits der Schweißpatrone aufgebaut werden. Das gibt doppelte Sicherheit für die Verbindung der Fugenbänder.

Der Stegaufbau bedingt eine entsprechende Form der Schweißpatrone. Die Schweißpatrone kann dazu mit Kanälen oder Stegen am Umfang versehen sein.

Ausreichend kann jedoch auch schon eine Änderung der Querschnittsform in der Weise sein, daß z. B. aus einem runden Querschnitt ein ovaler Querschnitt oder umgekehrt erzeugt wird. Dabei wird das plastifizierte und von der Schweißpatrone aus dem Fugenband herausgeschälte Material beiderseits der Schweißpatrone in den Dichtspalt gedrückt bzw. den Dichtspalt verschließend angelagert.

In der Zeichnung sind verschiedene Ausführungsbeispiele der Erfindung dargestellt.

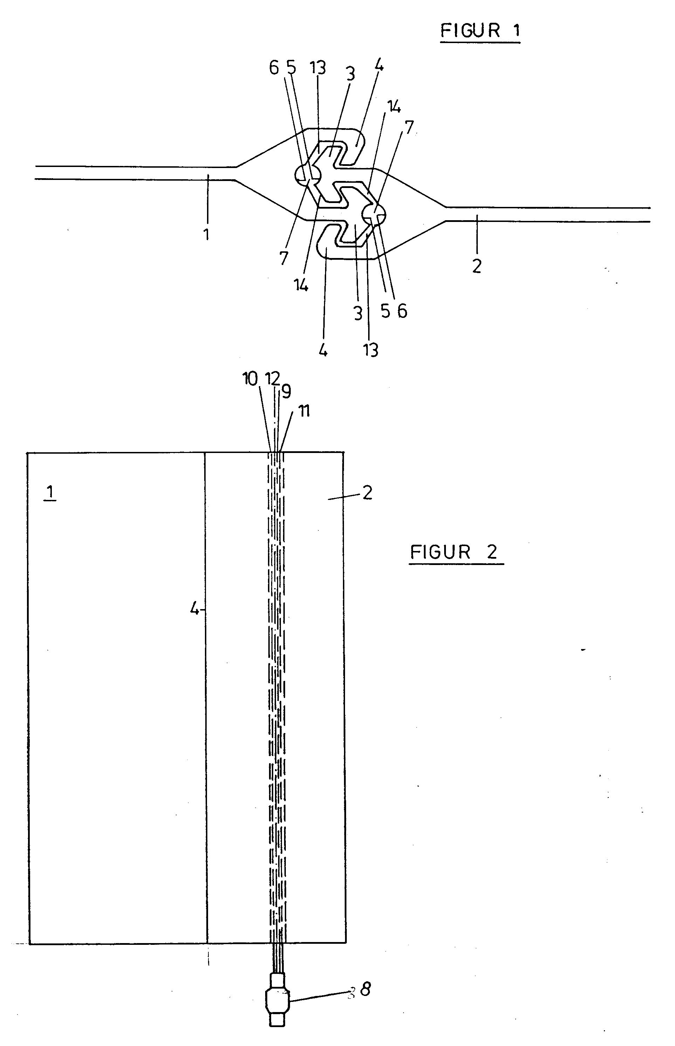

Mit 1 und 2 sind in Figur 1 und 2 zwei Fugenbänder bezeichnet. Beide Fugenbänder 1 und 2 besitzen je eine Spitze 3 und eine Spitze 4. Dabei umfaßt das Fugenband 2 mit seiner Spitze 4 die Spitze 3 des Fugenbandes 1.

Am Ende der Spitze 3 befindet sich eine halbkreisförmige Ausnehmung 5, die sich mit einer gegenüberliegenden Ausnehmung 6 in der Spitze 4 zu einer die beiden Fugenbänder 1 und 2 in Längsrichtung durchsetzenden Öffnung mit rundem Querschnitt ergänzt. Dies ist im montierten Zustand beider Fugenbänder der Fall. Der montierte Zustand tritt ein, wenn die Fugenbänder an ihren den Spitzen 3 und 4 abgewandten Enden mit Abdichtungsbahnen verschweißt sind und die Abdichtungsbahnen nacheinander und unter Ineinanderschieben der Fugenbänder 1 und 2 in einem mit Betonit gefüllten Erdschlitz abgesenkt worden sind.

In Anwendung der Fugenbänder 1 und 2 auf Paneele sind die Fugenbänder 1 und 2 an ihren den Spitzen 3 und 4 abgewandten Enden in die aus Beton bestehenden Paneele eingeformt. Damit ein Herausziehen vermieden wird, sind die in die Paneele eingeformten Enden in geeigneter Weise profiliert.

Nach Figur 1 ist mit der zuletzt abgesenkten Abdichtungsbahn bzw. mit dem zuletzt abgesenkten Fugenband zugleich eine Schweißpatrone 8 mit abgesenkt worden. Die Schweißpatrone 8 wird dazu in eine nicht dargestellte Position unter dem Fugenband gebracht, in der sie das Ineinanderschieben der Spitzen 3 und 4 nicht behindert. Diese Position kann durch angeheftete Kunststoffstreifen oder dergleichen gesichert werden. Die Schweißpatrone 8 kann auch bereits mit dem ersten abgesenkten Fugenband in die Ausgangsposition gebracht werden. In diesem Fall empfiehlt sich auch eine Sicherung der Schweißpatrone 8 in der Ausgangsstellung. Die Sicherung kann in gleicher Weise wie beim Absenken der Schweißpatrone mit dem nachfolgenden Fugenband hergestellt werden.

Nach vollständigem Ineinanderschieben der Fugenbänder 1 und 2 wird die Schweißpatrone 8 über Elektrokabel 9 und 10 mit Strom beaufschlagt. Dadurch erfährt die Schweißpatrone 8 eine Erwärmung. Die Erwärmung kann über einen integrierten Temperaturfühler mit einer Leitung 11 elektrisch gemessen werden. Der Messung folgend kann die Stromzuführung so genau gesteuert werden, daß eine genaue Temperaturhaltung möglich ist.

Nach Erreichen der gewünschten Schweißtemperatur wird die Schweißpatrone mit Hilfe eines an der Schweißpatrone 8 befestigten Zugseiles 12 durch die Öffnung 7 nach oben gezogen. Dabei drückt die Schweißpatrone die in der Öffnung 7 stehende Bentonitsäule vor sich her. Die dazu aufzuwendenden Kräfte sind gering; bei 30 m Flüssigkeitssäule ca. 3 kg. Höher sind die Kräfte, die sich aus einer mit der Schweißpatrone 8 vorgesehenen Aufweitung der Öffnung 7 und Materialverformung ergeben. Die Aufweitung der Öffnung 7 bewirkt zunächst ein Aneinanderlegen der Dichtflächen beider Spitzen 3 und 4 in dem mit 13 bezeichneten Spaltbereich. Das bewirkt ein Verschließen des Spaltes gegen nachströmenden flüssigen Bentonit.

Desweiteren bewirkt eine Aufweitung der Öffnung 7 nach Aufschmelzen der Berührungsflächen mit der Heizpatrone eine Materialverschiebung. Plastifiziertes Material der Spitzen 3 und 4 wird in den Spaltbereich 14 beiderseits der Heizpatrone 8 gezwängt. Das geschieht unter Abschälen der verschmutzten Oberflächen und Einbettung aller im Spalt bzw. der Öffnung 7 verbliebenen Schmutzpartikel. Das Ergebnis ist eine vorteilhafte Stegbildung, die den Spaltbereich 14 verschließt.

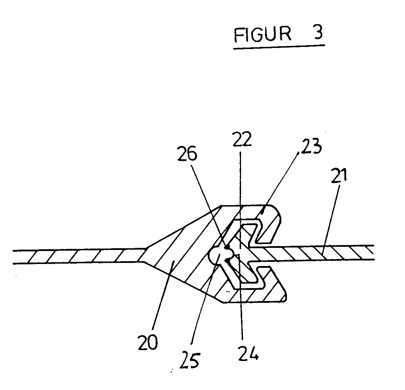

Figur 3 zeigt zwei Fugenbänder 20 und 21 mit Spitzen 23 und 24, von denen die der Spitze 3 entsprechende widerhakenförmige Spitze 22 im Bereich ihrer Rundung 24 zwei in die Öffnung 25 ragende Nasen 26 aufweist. Die Nasen 26 bilden eine Materialanhäufung im Bereich des Dichtspaltes, der die erfindwngsgemäße Umformung erleichtert.

Die Figuren 4 und 5 zeigen weitere erfindungsgemäße Fugenbänder. Dabei wird ein wesentlicher Unterschied zu den Fugenbändern nach Figur 1 bis 3 durch eine andere Neigung der Dichtflächen gebildet.

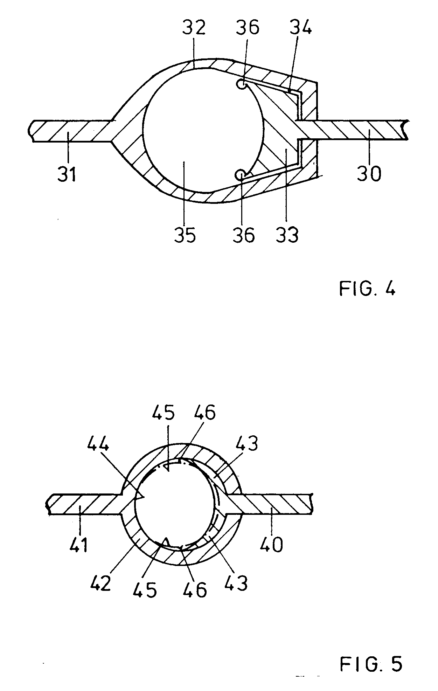

In Figur 4 sind die Fugenbänder mit 30 und 31 bezeichnet. Die mit 33 bezeichnete Spitze des Fugenbandes 30, die von einer Spitze 32 des Fugenbandes 31 umschlossen ist, verjüngt sich zu dem der Spitze 32 abgewandten Fugenbandende hin. Das hat bei der Aufweitung der mit 35 bezeichneter Öffnung ein vorteilhaftes Verschließen des Dichtspaltes zur Folge.

Im Ausführungsbeispiel besitzt auch die Spitze 33 Materialnasen 36, die in die Öffnung 35 ragen und die Verformungsarbeit bzw. Einbettung der der Abdichtung hinderlichen Bentonitpartikel erleichtern.

Figur 5 zeigt Fugenbänder 40 und 41. Dabei besitzt das Fugenband 41 eine Spitze 42 in Form eines geschlitzten Rohres 42.

Die mit der Spitze 42 korrespondierende Spitze 43 des Fugenbandes 40 wird im wesentlichen durch zwei Lippen gebildet. Die sich in beide Umfangsrichtungen erstrecken.

Die Spitzen 42 und 43 bilden in der gezeigten Ausgangsform eine innenliegende Öffnung mit einer Innenmantelfläche 44. Die Spitzen 42 und 43 werden mit Hilfe der Schweißpatrone 8 derart verformt, daß innen eine neue Öffnung entsteht mit einer strichpunktiert dargestellten Mantelfläche 45. Die Überschneidungsflächen beider Öffnungen, welche mit 46 bezeichnet sind, geben die Stege wieder, die nach Beendigung des Umformungsvorganges den Dichtspalt verschließen.

Alle dargestellten Profile bestehen aus Polyäthylen. Polyäthylen ist widerstandsfähig gegen alle in Deponien vorkommenden Sickerwässer. Polyäthylen läßt sich mit den zur Abdichtung üblicherweise verwendeten Kunststoffbahnen aus Hochdruckpolyäthylen oder äthylencopolymerhaltigen Bitumenmischungen verschweißen.

Alle dargestellten Fugenbänder haben im Ausführungsbeispiel eine Dicke von ca.15 mm. Damit sind die Fugenbänder gut wickelfähig. D. h. die Fugenbänder können mitsamt den Kunststoffabdichtungsbahnen werksseitig vorgefertigt werden. Die Innendurchmesser der Öffnungen 7 bzw. 25 bzw. 35 sind in den Zeichnungen vergrößert dargestellt. Nach der Erfindung kommen als Schweißpatrone 8 solche Schweißpatronen zum Einsatz, die einen Durchmesser von 5 oder 6 mm haben.

Durch die erfindungsgemäße Umformung entstehen den Dichtspalt verschließende Materialschichten von einer Mindestdicke von im Ausführungsbeispiel 3 mm. Wahlweise können auch größere Dicken gewählt werden. Das bedingt größere Umformarbeiten.

**Patentansprüche**

1.      Verfahren zur Verschweißung von Fugenbändern (1, 2; 20, 21; 30, 31; 40, 41) für Schlitzwandabdichtungen, insbesondere zur Verbindung von Kunststoffabdichtungsbahnen oder Betonpaneelen in Erdschlitzen mit Bentonitfüllung oder dergleichen, wobei jede zu verbindende Seite einer Kunststoffabdichtungsbahn bzw. eines Paneeles mit einem Fugenband (1, 2; 20, 21; 30, 31; 40, 41) versehen ist und beide zu verbindenden Abdichtungsbahnen bzw. Paneele unter Mitführen einer Schweißpatrone nacheinander in die Schlitzwand abgesenkt werden, wobei die Fugenbänder (1, 2; 20, 21; 30, 31; 40, 41) derart ineinandergeschoben werden, daß ein Widerstand gegen Auseinanderziehen in horizontaler Richtung gegeben ist und wobei anschließend die Fugenbänder (1, 2; 20, 21; 30, 31; 40, 41) durch Hochziehen der Schweißpatrone in einer, die beiden Fugenbänder 1 und 2 in Längsrichtung durchsetzenden Öffnung miteinander verschweißt werden, gekennzeichnet durch folgende Merkmale:

a) Herausdrücken der in der Öffnung (7) befindlichen Flüssigkeit mit der Schweißpatrone (8) oder einem vorlaufenden Kolben,

b) Aufweiten der Öffnung (7), bis die den Widerstand bildenden Kanten der Fugenbänder (1, 2; 20, 21; 30, 31; 40, 41) schließend aneinanderliegen,

c) Aufschmelzen von Berührungsflächen der Fugenbänder (1, 2; 20, 21; 30, 31; 40, 41) mit der Heizpatrone (8),

d) Umformen von aufgeschmolzenem Material zu einer Spaltüberdeckung.

2. Verfahren nach Anspruch 1, dadurch gekennzeichnet, daß von beiden korrespondierenden Fugenbänder (1, 2; 20, 21; 30, 31; 40, 41) ein Bereich aufgeschmolzen wird.

3. Verfahren nach Anspruch 1 oder 2, dadurch gekennzeichnet, daß ein vorragender Materialteil ( 20, 36) aufgeschmolzen wird.

4. Vorrichtung zur Verschweißung von Fugenbändern (1, 2; 20, 21; 30, 31; 40, 41) für Schlitzwandabdichtungen, insbesondere zur Verbindung von Kunststoffabdichtungsbahnen oder Betonpaneelen in Erdschlitzen mit Bentonitfüllungen oder dergleichen, wobei jede zu verbindende Seite eine Kunststoffabdichtungsbahn bzw. eines Paneeles mit einem Fugenband ( 1, 2; 20, 21; 30, 31; 40, 41) versehen ist und beide zu verbindenden Abdichtungsbahnen bzw. Paneele unter Mitführen einer Schweißpatrone (8) nacheinander in die Schlitzwand abgesenkt werden, wobei die Fugenbänder (1, 2; 20, 21; 30, 31; 40, 41) derart ineinandergeschoben werden, daß ein Widerstand gegen Ausziehen in horizontaler Richtung gegeben ist und wobei anschließend die Fugenbänder (1, 2; 20, 21; 30, 31; 40, 41) durch Hochziehen der Schweißpatrone (8) in einer, die beiden Fugenbänder in Längsrichtung durchsetzenden Öffnung 7 miteinander verschweißt werden, gekennzeichnet durch eine Schweißpatrone (8) mit Übermaß gegenüber der Öffnung 7.

5. Vorrichtung nach Anspruch 4, gekennzeichnet durch geschmolzenes Material lenkende Kanäle und/oder Stege an der Heizpatrone (8).

**Claims**

1. Process for welding sealing aprons (1, 2; 20, 21; 30, 31; 40, 41) for sealing diaphragm walls, especially for joining plastic sealing sheets or concrete panels in bentonite-filled trenches or the like, each side of a plastic sealing sheet or panel to be joined being provided with a sealing apron (1, 2; 20, 21; 30, 31; 40, 41) and the two sealing sheets or panels to be joined being lowered one after the other into the diaphragm wall together with a welding cartridge, the sealing aprons (1, 2; 20, 21; 30, 31; 40, 41) fitting into one another in such a manner that it is difficult for them to be separated in the horizontal direction and the sealing aprons (1, 2; 20, 21; 30, 31; 40, 41) subsequently being welded together by raising the welding cartridge in an opening passing through the two sealing aprons (1) and (2) in the longitudinal direction, characterised by the following features:

a) pressing out the liquid situated in the opening (7) with the welding cartridge (8) or by the forward movement of a piston,

b) widening the opening (7) until the edges of the sealing aprons (1, 2; 20, 21; 30, 31; 40, 41) producing the resistance meet in a sealed manner,

c) fusing the contact surfaces of the sealing aprons (1, 2; 20, 21; 30, 31; 40, 41) with the heated cartridge (8),

d) forming the fused material into a cover for the gap.

2. Process according to claim 1, characterised in that an area of the two corresponding sealing aprons (1, 2; 20, 21; 30, 31; 40, 41) is fused.

3. Process according to claim 1 or claim 2, characterised in that a projecting material portion (20, 36) is fused.

4. Apparatus for welding sealing aprons (1, 2; 20, 21; 30, 31; 40, 41) for sealing diaphragm walls, especially for joining plastic sealing sheets or concrete panels in bentonite-filled trenches or the like, each side of a plastic sealing sheet or panel to be joined being provided with a sealing apron (1, 2; 20, 21; 30, 31; 40, 41) and the two sealing sheets or panels to be joined being lowered one after the other into the diaphragm wall together with a welding cartridge (8), the sealing aprons (1, 2; 20, 21; 30, 31; 40, 41) fitting into one another in such a manner that it is difficult to separate them in the horizontal direction and the sealing aprons (1, 2; 20, 21; 30, 31; 40, 41) subsequently being welded together by raising the welding cartridge (8) in an opening (7) passing through the two sealing aprons in the longitudinal direction, characterised by a welding cartridge (8) which is oversized with respect to the opening (7).

5. Apparatus according to claim 4, characterised by channels and/or webs on the heated cartridge (8) for guiding the molten material.

**Revendications**

1. Procédé pour l'assemblage par soudage de bandes de joint d'étanchéité (1, 2; 20, 21; 30, 31; 40, 41) pour des rideaux souterrains d'étanchéité, notamment pour réaliser la liaison de nappes d'étanchéité en matière plastique ou de panneaux de béton dans des tranchées du sol remplies de bentonite ou analogue, chacun des côtés à relier d'une nappe d'étanchéité en matière plastique ou d'un panneau étant muni d'une bande de joint d'étanchéité (1, 2; 20, 21; 30, 31; 40, 41) et les deux nappes ou panneaux d'étanchéité à relier étant abaissés successivement dans la tranchée du rideau souterrain en entraînant une cartouche de soudage, les bandes de joint d'étanchéité (1, 2; 20, 21; 30, 31; 40, 41) s'imbriquant l'une dans l'autre de manière à obtenir une résistance à l'encontre d'une séparation en direction horizontale, et les bandes de joint d'étanchéité (1, 2; 20, 21; 30, 31; 40, 41) étant ensuite soudées l'une à l'autre par le retrait vers le haut de la cartouche de soudage dans une ouverture traversant les deux bandes de joint d'étanchéité (1 et 2) dans leur direction longitudinale, le procédé étant caractérisé par les particularités suivantes:

a) l'extraction du liquide se trouvant dans l'ouverture (7), au moyen de la cartouche de soudage (8) ou d'un piston qui la précède,

b) l'évasement de l'ouverture (7) jusqu'à ce que les bords des bandes de joint d'étanchéité (1, 2; 20, 21; 30, 31; 40, 41), réalisant l'effort de résistance, soient parfaitement jointifs,

c) la fusion de surfaces de contact des bandes de joint d'étanchéité (1, 2; 20, 21; 30, 31; 40, 41) à l'aide de la cartouche de soudage (8),

d) le façonnage de matière fondue pour former un recouvrement de l'interstice de joint.

2. Procédé selon la revendication 1, caractérisé en ce que la fusion est réalisée sur une zone de chacune de deux bandes de joint d'étanchéité correspondantes (1, 2; 20, 21; 30, 31; 40, 41).

3. Procédé selon la revendication 1 ou 2, caractérisé en ce que la fusion est réalisée sur une partie de matière en saillie (26, 36).

4. Dispositif pour l'assemblage par soudage de bandes de joint d'étanchéité (1, 2; 20, 21; 30, 31; 40, 41) pour des rideaux souterrains d'étanchéité, notamment pour réaliser la liaison de nappes d'étanchéité en matière plastique ou de panneaux de béton dans des tranchées du sol remplies de bentonite ou analogue, chacun des côtés à relier d'une nappe d'étanchéité en matière plastique ou d'un panneau étant muni d'une bande de joint d'étanchéité (1, 2; 20, 21; 30, 31; 40, 41) et les deux nappes ou panneaux d'étanchéité à relier étant abaissés successivement dans la tranchée du rideau souterrain en entraînant une cartouche de soudage (8), les bandes de joint d'étanchéité (1, 2; 20, 21; 30, 31; 40, 41) s'imbriquant l'une dans l'autre de manière à obtenir une résistance à l'encontre d'une séparation en direction horizontale, et les bandes de joint d'étanchéité (1, 2; 20, 21; 30, 31; 40, 41) étant finalement soudées l'une à l'autre par le retrait vers le haut de la cartouche de soudage (8) dans une ouverture (7) traversant les deux bandes de joint d'étanchéité dans leur direction longitudinale, caractérisé par une cartouche de soudage (8) de dimension supérieure à celle de l'ouverture (7).

5. Dispositif selon la revendication 4, caractérisé par des canaux et/ou des nervures de guidage de la matière fondue, réalisés sur la cartouche de soudage (8).

FIGUR 1

FIGUR 2

FIGUR 3

FIG. 4

FIG. 5